# FASCICULE DE BREVET EUROPEEN

(11) **EP 0 564 310 B1**
(45) Date de publication et mention de la délivrance du brevet: **11.12.1996**
(21) Numéro de dépôt: 93400466.4
(22) Date de dépôt: 23.02.1993
(51) Int. Cl.: B60R 25/02

(54) **Ensemble de colonne de direction notamment pour véhicule automobile**
Aufbau einer Lenksäule, insbesondere für Kraftfahrzeuge
Steering column assembly in particular for a motor vehicle

(30) Priorité: 02.04.1992 FR 9204026
(43) Date de publication de la demande: 06.10.1993
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR)
(74) Mandataire: Habasque, Etienne Joel Jean-François

(56) Documents cités:
- FR-A- 2 527 150
- US-A- 3 566 634

## Description

La présente invention concerne un ensemble de colonne de direction notamment pour véhicule automobile.

Plus particulièrement, l'invention se rapporte à un ensemble de colonne du type comportant un arbre de direction monté déplaçable à rotation dans un corps de colonne comportant un mécanisme à pène d'antivol du véhicule, déplaçable entre une position escamotée et une position active d'antivol.

Dans certains ensembles de ce type, l'arbre de direction comporte deux portions d'arbre, l'une portant le volant et l'autre étant reliée au reste du mécanisme de direction du véhicule et reliées par des moyens de liaison débrayables, déplaçables, sous la commande du mécanisme d'antivol, entre une position active d'accouplement des deux portions d'arbre et une position escamotée d'antivol de libération des deux portions d'arbre l'une par rapport à l'autre, de manière que la portion d'arbre portant le volant soit libre en rotation par rapport à l'autre portion d'arbre reliée au reste du mécanisme de direction du véhicule.

De tels ensembles de colonnes sont connus par exemple du document EP-A-0 058 590.

Ce document décrit un antivol à débrayage du volant pour véhicule automobile, dans lequel la barre de direction est formée de deux tronçons, à savoir une barre primaire, sur laquelle est monté le volant et une barre secondaire, reliée au reste du mécanisme de direction du véhicule.

Ces deux barres sont disposées bout à bout et l'entraînement de la barre secondaire à partir de la barre primaire, s'effectue au moyen d'une liaison débrayable faisant intervenir une conformation appropriée des extrémités adjacentes des deux barres et un cylindre d'assemblage présentant une surface interne conformée de manière à ce que ce cylindre soit solidaire en rotation de l'une et/ou de l'autre de ces extrémités, tout en pouvant librement coulisser sur celles-ci, les déplacement axiaux du cylindre d'assemblage étant obtenus à partir du mouvement de rotation d'une clé au moyen d'un système comprenant un excentrique et une bielle.

En fait, ces dispositifs ont été développés pour améliorer l'inviolabilité des véhicules en rendant le volant de direction libre en rotation, en position active du mécanisme d'antivol.

On s'est en effet aperçu que les ensembles de colonnes classiques dans lesquels le pène du mécanisme d'antivol s'engage en position active dans une lumière de l'arbre de direction, pouvaient facilement être forcés, ce qui se traduisait par des dégradations relativement importantes de la colonne de direction lors de tentatives de vol et une réduction notable de la sécurité de fonctionnement du véhicule.

Le document US-A-3 566 634 décrit également un ensemble conforme au préambule de la revendication 1.

Cependant, les ensembles du type de celui décrit dans les documents précités, présentent un certain nombre d'inconvénients au niveau de leur structure relativement complexe, de la continuité de maintien mécanique des différentes pièces et en particulier des portions d'arbre entrant dans la constitution de ces ensembles, de la sécurité de fonctionnement des moyens de liaison débrayables et des jeux de transmission du mouvement de rotation entre la portion d'arbre portant le volant et la portion d'arbre reliée au reste du mécanisme de direction du véhicule.

Le but de l'invention est donc de résoudre ces problèmes en proposant un ensemble de colonne de direction notamment de véhicule automobile, du type tel que décrit précédemment, caractérisé en ce que le manchon est monté déplaçable entre les deux portions d'arbre externe et interne, et en ce que le manchon est déformable radialement et en ce qu'il comporte des moyens de mise sous contrainte du manchon entre les deux portions d'arbre en position active de celui-ci, pour assurer une transmission sans jeu du mouvement de rotation entre les portions d'arbre.

L'invention sera mieux comprise à l'aide de la description qui va suivre, donnée uniquement à titre d'exemple et faite en se référant aux dessins annexés, sur lesquels :
- la Fig.1 représente une vue en coupe d'un premier mode de réalisation d'un ensemble de colonne de direction selon l'invention, dans laquelle des moyens de liaison débrayables entrant dans la constitution de cet ensemble sont en position active;
- la Fig.2 représente une vue en coupe du premier mode de réalisation de l'ensemble selon l'invention représenté sur la Fig.1, dans laquelle les moyens de liaison débrayables sont en position escamotée d'antivol;
- la Fig.3 représente une section prise selon la ligne III-III de la Fig.2;
- les Fig.4,5,6 et 7 illustrent le déplacement d'un manchon des moyens de liaison débrayables entrant dans la constitution d'un ensemble selon l'invention, entre une position active d'accouplement de deux portions d'arbre et une position escamotée d'antivol de libération de celles-ci, l'une par rapport à l'autre;
- les Fig.8 et 9 représentent une variante de réalisation de moyens de verrouillage du manchon des moyens de liaison débrayables entrant dans la constitution d'un ensemble selon l'invention, respectivement en positions active et escamotée; et
- la Fig.10 représente une vue en coupe d'un autre mode de réalisation d'un ensemble de colonne de direction selon l'invention.

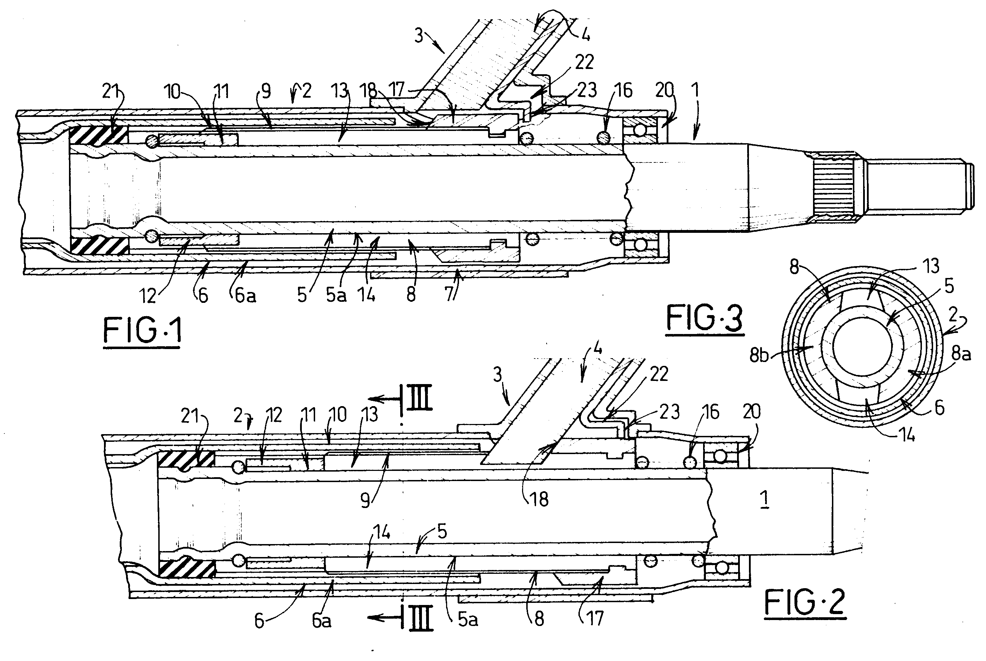

Ainsi qu'on peut le voir sur les Fig.1 à 7, un ensemble de colonne de direction notamment pour véhicule automobile, selon l'invention, comporte un arbre de direction 1 monté déplaçable à rotation dans un corps de colonne 2 comportant un mécanisme 3 à pène d'antivol du véhicule. Ce pène est désigné par la référence générale 4.

Comme cela sera décrit plus en détail par la suite, ce pène est monté déplaçable entre une position escamotée représentée sur la Fig.1 et une position active d'antivol, représentée sur la Fig.2.

L'arbre de direction comporte deux portions d'arbre désignées par les références générales 5 et 6 sur ces figures. L'une de ces portions d'arbre porte le volant de direction tandis que l'autre est reliée au reste du mécanisme de direction du véhicule.

Ces portions d'arbre sont reliées par des moyens de liaison débrayables désignés par la référence générale 7 sur ces figures. Ces moyens de liaison débrayables sont montés déplaçables, sous la commande du mécanisme d'antivol, entre une position active d'accouplement des deux portions d'arbre, représentée sur la Fig.1 et une position escamotée d'antivol de libération des deux portions d'arbre l'une par rapport à l'autre, représentée sur la Fig.2, de manière que la portion d'arbre portant le volant soit libre en rotation par rapport à l'autre portion d'arbre reliée au reste du mécanisme de direction du véhicule.

Selon l'invention des zones d'extrémité correspondantes des portions d'arbre 5 et 6, désignées respectivement par les références 5a et 6a, sont disposées l'une autour de l'autre et les moyens de liaison débrayables 7 sont montés déplaçables entre les deux portions d'arbre externe et interne.

Dans le mode de réalisation représenté sur ces figures, la portion d'arbre interne est constituée par la portion d'arbre désignée par la référence 5 et porte le volant de direction, tandis que la portion d'arbre externe est constituée par la portion d'arbre désignée par la référence 6 et est reliée au reste du mécanisme de direction.

Les moyens de liaison désignés par la référence générale 7 comprennent en fait un manchon 8 déplaçable entre les deux portions d'arbre et comportant des premiers moyens d'accouplement adaptés pour coopérer avec des moyens d'accouplement complémentaires de la portion d'arbre 6 reliée au reste du mécanisme de direction du véhicule.

Ces premiers moyens d'accouplement sont désignés par la référence générale 9.

Ce manchon comporte également des seconds moyens d'accouplement adaptés pour coopérer avec des moyens d'accouplement complémentaires de la portion d'arbre 5 portant le volant.

Ces moyens d'accouplement sont désignés par la référence générale 10 sur ces figures.

Avantageusement, au moins les seconds moyens d'accouplement 10 sont débrayables.

Ainsi qu'on peut le constater à la lumière de ces figures, le manchon 8 est monté déplaçable à coulissement entre les portions d'arbre 5 et 6 entre une première position représentée sur la Fig.1 et une seconde position représentée sur la Fig.2, respectivement d'embrayage et de débrayage, des seconds moyens d'accouplement 10.

En fait, les premiers moyens d'accouplement 9 peuvent être formés par des parties en saillie et en creux radiales complémentaires de ce manchon 8 et de la portion d'arbre correspondante 6 pour autoriser un coulissement axial du manchon par rapport à cette portion d'arbre. Les parties en saillie et en creux radiales complémentaires sont par exemple constituées par des cannelures de type connu en soi.

Les seconds moyens d'accouplement 10 peuvent quant à eux être formés par des parties en saillie et en creux axiales correspondantes de l'autre portion d'arbre 5 et du manchon 8, et plus particulièrement d'une extrémité de celui-ci.

Avantageusement, il est prévu des moyens de mise sous contrainte du manchon 8 entre les deux portions d'arbre 5 et 6, en position active de ce manchon, pour assurer une transmission sans jeu du mouvement de rotation entre les portions d'arbre.

En fait, ce manchon est déformable radialement et dans le mode de réalisation représenté sur ces figures, les seconds moyens d'accouplement 10 comprennent des moyens d'expansion du manchon 8 contre la portion d'arbre externe 6 en position active de celui-ci.

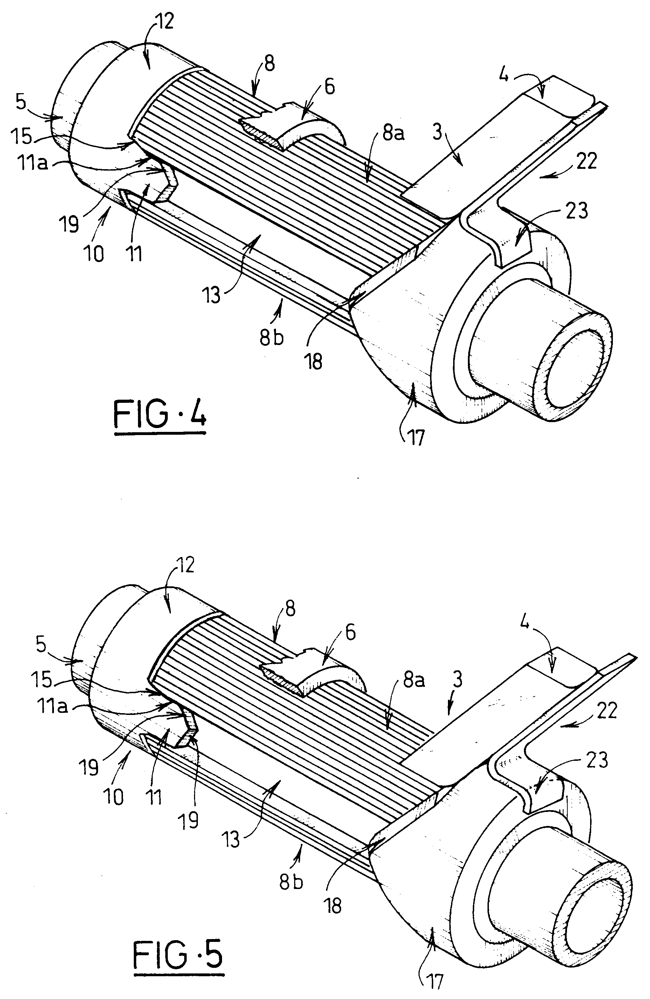

Comme on peut le voir plus particulièrement sur les Fig.4 à 7, les seconds moyens d'accouplement désignés par la référence générale 10 peuvent être formés par au moins une partie en saille axiale 11 prévue sur une bague 12 disposée autour et solidaire de la portion d'arbre interne 5.

Les seconds moyens d'accouplement 10 comprennent en fait dans ce mode de réalisation deux parties en saillie axiales décalées angulairement d'un angle différent de 180° et adaptées pour coopérer avec deux fentes axiales correspondantes du manchon, désignées par les références 13 et 14 (Fig.3).

Comme cela sera décrit plus en détail par la suite, ceci permet de réaliser un détrompage lors de l'accouplement des portions d'arbre en définissant une position unique d'accouplement.

Bien entendu, cette position unique d'accouplement angulaire peut être obtenue d'une autre façon par exemple en réalisant des fentes de largeurs différentes adaptées pour coopérer avec des parties en saillie de dimensions correspondantes.

Comme cela est visible plus clairement sur la Fig.7, la ou chaque partie en saillie, par exemple 11, et/ou les parois délimitant la ou chaque fente par exemple 13, des seconds moyens d'accouplement 10, peuvent comporter des rampes d'expansion du manchon contre la portion d'arbre externe.

Avantageusement, comme cela est représenté sur cette figure 7, les rampes d'expansion sont prévues sur la ou chaque partie en saillie axiale 11 de la bague 12 reliée à la portion d'arbre interne 5 et sont désignées par la référence générale 15.

Comme cela est visible sur ces figures, les seconds moyens d'accouplement 10 sont prévus à l'une des extrémités du manchon 8 entre les portions d'arbre externe et interne.

Le manchon peut en fait être formé de deux demi-coquilles 8a et 8b (Fig.3) reliées à l'une de leurs extrémités.

Des moyens 16 ( Fig.1 et 2) de sollicitation du manchon en position active d'accouplement des deux portions d'arbre externe et interne sont également prévus. Ces moyens sont par exemple formés par un ressort hélicoïdal disposé autour de la portion d'arbre interne 5. L'une des extrémités de ce ressort est en appui sur une extrémité du manchon et avantageusement l'extrémité de celui-ci opposée à celle à laquelle sont prévus les seconds moyens d'accouplement 10, tandis que l'autre extrémité de ce ressort est en appui sur une surface de butée de la portion d'arbre interne 5.

Ce manchon 8 comporte également une bague de déplacement 17 comportant au moins une portion en forme de came 18 adaptée, comme cela sera décrit plus en détail par la suite, pour coopérer avec le pène 4 du mécanisme d'antivol 3, lorsque celui-ci est en position active, pour déplacer le manchon 8 vers sa position escamotée d'antivol lors de la rotation des portions d'arbre.

Selon un mode de réalisation, la bague de déplacement 17 comporte deux portions en forme de came de déplacement, diamétralement opposées.

Cette bague de déplacement 17 est avantageusement disposée à proximité de l'extrémité du manchon 8 opposée à celle à laquelle sont prévus les seconds moyens d'accouplement 10 et au-delà de l'extrémité correspondante de la portion d'arbre externe, la ou chaque portion en forme de came étant dirigée vers les seconds moyens d'accouplement 10.

Il est à noter que l'extrémité de la ou de chaque partie en saillie axiale des seconds moyens d'accouplement, comporte des plans inclinés comme par exemple les plans inclinés 19 de la partie en saillie 11 représentée sur la Fig.7. Ces plans inclinés sont adaptés pour coopérer avec une arête d'extrémité correspondante de la ou chaque partie en creux axiale et avec le bord d'extrémité du manchon, pour provoquer, comme cela sera décrit plus en détail par la suite, un recul supplémentaire du manchon 8 en position escamotée en fin de course de déplacement de celui-ci, lors de la rotation des portions d'arbre, afin de dégager la bague de déplacement 17 et plus particulièrement la portion en forme de came 18, du pène 4 et faciliter l'engagement de ce pène dans une lumière de blocage du manchon en position.

Avantageusement, cette lumière de réception du pène du mécanisme d'antivol en position active de celui-ci permet de bloquer ce manchon et donc la portion d'arbre reliée au reste du mécanisme de direction du véhicule en position par rapport au corps de colonne.

La ou chaque lumière de ce manchon adaptée pour recevoir ce pène en position active est formée par une portion de la ou de chaque fente par exemple 13 de ce manchon (Fig.7).

La ou chaque lumière de ce manchon est ménagée en regard d'une portion en forme de came 18 de la bague de déplacement 17 du manchon pour provoquer un déplacement correct du pène 4 vers sa position active dans une lumière.

On notera que la ou chaque partie en saillie des seconds moyens d'accouplement 10 comporte donc des rampes d'expansion 15 du manchon et des plans inclinés 19 de recul de celui-ci, ces rampes et ces plans étant séparés par une portion plane d'anti-recul du manchon désignée par la référence générale 11a sur les Fig.4 à 7, permettant d'assurer une sécurité supplémentaire d'accouplement.

Par ailleurs, les surfaces de contact de ces parties en saillie et en creux des seconds moyens d'accouplement peuvent être par exemple les unes bombées et les autres en forme de plans inclinés, ce qui permet d'assurer un rattrapage automatique de jeux angulaire et radial, de façon classique au niveau de ces moyens d'accouplement, par coopération de ce type de surfaces.

Des paliers de guidage de la portion d'arbre portant le volant, c'est à dire dans le mode de réalisation représenté sur ces figures, la portion d'arbre 5, sont interposés d'une part, entre le corps de colonne 2 et une partie correspondante de cette portion d'arbre et d'autre part, entre une autre partie de cette portion d'arbre et une partie correspondante de la portion d'arbre reliée au reste du mécanisme de direction, c'est à dire la portion d'arbre externe 6, pour optimiser la rigidité de l'arbre de direction et la fréquence propre de celui-ci.

Ces paliers de guidage sont désignés respectivement par les références 20 et 21 (Fig.1 et 2).

L'un et/ou l'autre de ces paliers assure une immobilisation axiale de l'arbre de direction 1 par rapport au corps de colonne 2.

De plus, cet ensemble comporte également des moyens escamotables de verrouillage du manchon en position active.

Ces moyens sont désignés par la référence générale 22 sur ces figures et sont montés déplaçables entre une position active de verrouillage et une position escamotée de déverrouillage de ce manchon par l'intermédiaire du mécanisme à pène d'antivol du véhicule, permettant d'assurer une sécurité supplémentaire d'accouplement.

Dans le mode de réalisation représenté sur ces figures 1 à 7, les moyens de verrouillage 22 comprennent un organe de verrouillage dont une extrémité 23 est recourbée en forme de crochet adapté pour coopérer avec une surface de butée correspondante du manchon 8, pour retenir celui-ci en position et interdire son recul, et dont l'autre extrémité est reliée au mécanisme à pène d'antivol, pour son déplacement.

Dans le mode de réalisation représenté, la surface de butée correspondante du manchon est formée par la surface d'extrémité de celui-ci opposée à celle à laquelle sont prévus les seconds moyens d'accouplement 10.

Si l'on se reporte aux Fig.1 et 4 par exemple, on conçoit que les moyens élastiques 16 sollicitent le manchon 8 en position d'accouplement des deux portions d'arbre 5 et 6. Dans cette position, les parties en saillie 11 des seconds moyens d'accouplement 10 sont engagés dans les fentes correspondantes par exemple 13 du manchon 8 et les rampes d'expansion 15 de celles-ci provoquent une expansion de ce manchon contre la portion d'arbre externe 6, par exemple par écartement des deux demi-coquilles de ce manchon.

Lors de la rotation du volant par un utilisateur, le mouvement de rotation de la portion d'arbre interne 5 portant le volant est transmise à travers les seconds moyens d'accouplement 10 au manchon 8 et de ce manchon, à travers les moyens d'accouplement 9 à la portion d'arbre externe 6 reliée au reste du mécanisme de direction.

Tout jeu de transmission entre les portions d'arbre est éliminé du fait de la mise sous contrainte du manchon entre les deux portions d'arbre.

Par ailleurs, cette portion d'arbre interne 5 portant le volant est guidée d'une part dans le corps de colonne par l'intermédiaire du palier 20 et d'autre part, dans la portion d'arbre externe 6 par le palier 21, de sorte que le guidage de celle-ci est bien assuré.

Ainsi, l'ensemble portion d'arbre interne 5, manchon de liaison débrayable 8 et portion d'arbre externe 6, tourne tout à fait librement dans le corps de colonne 2 pour permettre à l'utilisateur de contrôler la direction du véhicule.

Lorsque l'utilisateur déclenche le mécanisme à pène d'antivol du véhicule, par exemple en retirant la clé de celui-ci, le pène 4 est libéré et se déplace de manière connue en soi vers l'arbre de direction.

Ce déplacement vers sa position active du pène est limité soit par la bague de déplacement 17 et plus particulièrement la surface supérieure d'une portion en forme de came 18 de celle-ci, si cette portion se trouve en regard du pène au moment où l'utilisateur déclenche le mécanisme d'antivol, soit par le manchon 8 lui-même comme on peut le voir sur la Fig.4.

On notera qu'il est habituel pour un utilisateur d'un véhicule automobile, de faire tourner plus ou moins le volant de direction pour obtenir l'effet de verrouillage souhaité par le pène, dans les ensembles de colonne comportant des mécanismes à pène d'antivol classiques dans lesquels le pène s'engage dans une lumière de l'arbre de direction. En effet, la lumière de l'arbre n'est pas toujours en face du pène au moment du déclenchement du mécanisme d'antivol et il est nécessaire de déplacer légèrement l'arbre grâce au volant pour que cette lumière arrive juste en face du pène, de façon que celui-ci puisse s'engager en position active dans cette lumière pour assurer le verrouillage.

Cette routine est mise à profit dans l'ensemble de colonne de direction selon l'invention pour provoquer un déplacement du manchon des moyens de liaison débrayables vers sa position escamotée d'antivol de libération des deux portions d'arbre.

En effet, si le pène 4 du mécanisme d'antivol est en butée contre la surface supérieure d'une portion en forme de came 18 de la bague de déplacement 17 du manchon, un déplacement angulaire du volant est donc des portions d'arbre par l'utilisateur, provoque le déplacement de cette portion en forme de came 18 par rapport au pène jusqu'à ce que celui-ci soit dégagé et puisse venir en appui contre la surface extérieure du manchon 8.

Le pène se trouve alors dans la position représentée sur la Fig.4.

Cette descente du pène vers sa position active provoque le déplacement des moyens de verrouillage 22 vers une position escamotée de déverrouillage du manchon comme on peut le voir sur la Fig.5.

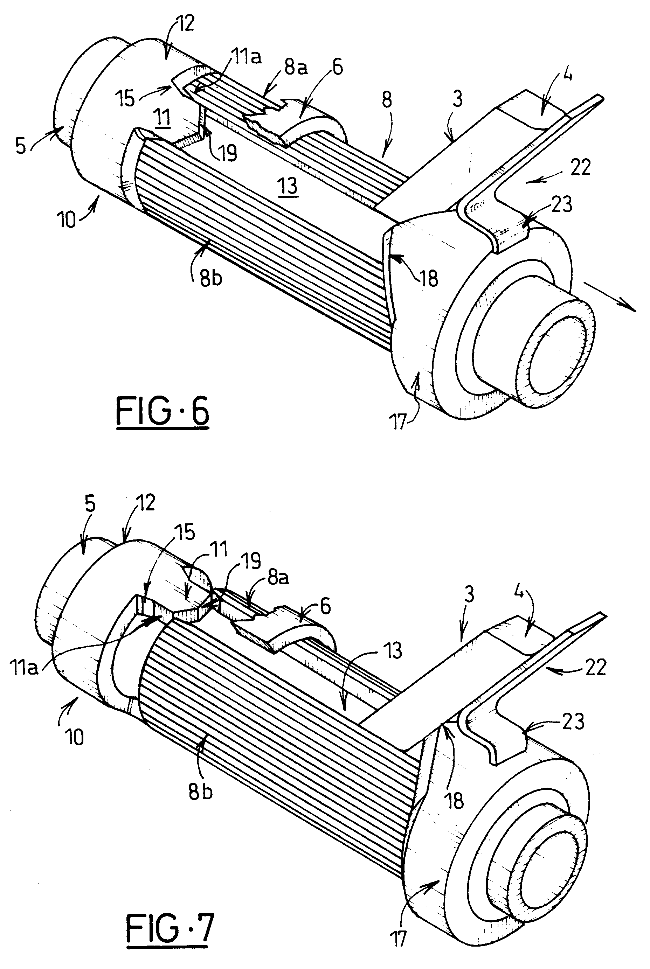

Si l'utilisateur provoque un autre déplacement angulaire du volant et donc des portions d'arbre, l'une ou l'autre des portions en forme de came 18 de la bague de déplacement 17 du manchon 8, vient en appui contre ce pène, comme on peut le voir sur les figures 5 et 6. La poursuite de ce déplacement angulaire des portions d'arbre provoque alors le recul du manchon 8 à l'encontre de la sollicitation des moyens élastiques 16 par appui d'une portion en forme de came de la bague de déplacement du manchon sur le pène. Ce recul du manchon provoque le dégagement de l'extrémité correspondante de celui-ci des rampes d'expansion 15 des parties en saillie 11 des seconds moyens d'accouplement (Fig.6).

A partir de cet instant, le manchon 8 n'est donc plus sous contrainte entre la portion d'arbre externe et la portion d'arbre interne.

Lors de la poursuite du déplacement angulaire des portions d'arbre et donc du manchon par l'utilisateur, d'une part le sommet de la portion en forme de came 18 et d'autre part une lumière de réception de ce pène, ménagée dans le manchon et constituée par exemple par la fente 13 de celui-ci, arrivent en face du pène.

La coopération des plans inclinés 19 des parties en saillie 11 des seconds moyens d'accouplement 10 avec l'une ou l'autre des arêtes d'extrémité correspondantes de la ou de chaque partie en creux axiale du manchon, provoque alors un recul supplémentaire du manchon, afin de dégager la bague de déplacement 17 du manchon qui recule par rapport au pène 4 ce qui facilite l'engagement de ce pène dans la fente correspondante de celui-ci, comme on peut le voir sur la Fig.7.

Dans cette position escamotée du manchon, les seconds moyens d'accouplement 10 sont donc en position débrayée de sorte que la portion d'arbre interne 5 portant le volant n'est plus accouplée au manchon et peut tourner librement par rapport à celui-ci et à la portion d'arbre externe reliée au reste du mécanisme de direction.

Le manchon est maintenu dans cette position par le pène en position active d'antivol.

On obtient alors un effet d'antivol efficace dans la mesure où le volant est totalement libre en rotation tandis que le reste du mécanisme de direction est bloqué en position par l'intermédiaire de la portion d'arbre externe 6 et des premiers moyens d'accouplement 9 prévus entre cette portion d'arbre externe 6 et le manchon 8, ce manchon étant bloqué en rotation par rapport au corps de colonne 2 par le pène 4 engagé dans une fente 13 de ce manchon.

Cette position est représentée sur la Fig.2.

Lorsque l'utilisateur souhaite se servir à nouveau du véhicule, il entraîne par l'intermédiaire par exemple d'une clé, le déplacement du mécanisme à pène d'antivol du véhicule, de la position active d'antivol vers la position escamotée.

Le pène se dégage alors de la fente 13 du manchon et libère celui-ci.

Ce manchon est alors poussé vers sa position active par les moyens de sollicitation élastiques 16.

Cependant, tant que la ou chaque partie en saillie 11 des seconds moyens d'accouplement 10 n'est pas en regard de la ou de chaque fente correspondante 13 ou 14 du manchon, celui-ci ne peut se déplacer totalement vers sa position active d'accouplement des deux portions d'arbre.

Selon une routine habituelle, l'utilisateur déplace alors angulairement le volant de direction et la portion d'arbre interne 5 jusqu'à obtenir cette position particulière unique dans laquelle les parties en saillie par exemple 11 arrivent en regard des fentes correspondantes 13 et 14 du manchon. Le manchon peut alors se déplacer vers sa position active sous la poussée des moyens élastiques 16 qui se détendent.

Une fois le manchon dans cette position, les moyens 22 de verrouillage du manchon en position active redescendent dans la position représentée sur la Fig.1, dans laquelle ils bloquent ce manchon en position.

Le manchon est quant à lui sollicité par les moyens élastiques 16 vers la position active et les rampes d'expansion 15 par exemple des parties en saillie 11 des seconds moyens d'accouplement 10 assurent l'expansion de ce manchon pour obtenir l'effet de mise sous contrainte de celui-ci entre les portions d'arbre interne et externe.

Cette expansion du manchon et donc sa mise sous contrainte entre les deux portions d'arbre sont obtenues de manière extrêmement efficace du fait de la récupération de l'énergie de détente des moyens élastiques 16.

Le fonctionnement de cet ensemble peut donc être divisé en plusieurs phases :

### 1) Phase de fonctionnement normal

La liaison entre la portion d'arbre portant le volant et la portion d'arbre reliée au reste du mécanisme de direction est assurée par les premiers moyens d'accouplement entre le manchon et cette portion d'arbre reliée au reste du mécanisme de direction et par les seconds moyens d'accouplement entre ce manchon et la portion d'arbre portant le volant. Le manchon est mis sous contrainte entre les deux portions d'arbre par les parties en saillie et plus particulièrement les rampes d'expansion, de ces seconds moyens d'accouplement, le manchon est retenu en position par les moyens de verrouillage.

### 2) Phase de débrayage des moyens d'accouplement des deux portions d'arbre.

Lorsque l'utilisateur retire par exemple la clé du mécanisme d'antivol, le pène de celui-ci se déplace de sa position escamotée vers sa position active. Les moyens de verrouillage du manchon en position active s'escamotent. Par rotation du volant, l'utilisateur provoque la venue en butée d'une portion en forme de came de la bague de déplacement du manchon contre le pène de ce mécanisme d'antivol.

Lors de la poursuite de la rotation du volant et donc des portions d'arbre, la portion en forme de came de déplacement de ce manchon, en butée sur le pène, entraîne un recul de ce manchon de sa position active vers une position escamotée, dans laquelle les seconds moyens d'accouplement sont débrayés. Lorsque le manchon est en position escamotée, le pène est engagé dans une lumière de blocage du manchon en position et donc de blocage de la portion d'arbre reliée au reste du mécanisme de direction en rotation, par rapport au corps de colonne, par l'intermédiaire des premiers moyens d'accouplement entre ce manchon et cette portion d'arbre. Les seconds moyens d'accouplement sont complétement débrayés et la portion d'arbre portant le volant peut tourner librement par rapport au reste de l'ensemble de colonne de direction.

Il n'est ainsi plus possible de forcer l'une ou l'autre des pièces de cet ensemble de colonne.

### 3) Phase d'embrayage des moyens d'accouplement des deux portions d'arbre.

Lorsque l'utilisateur souhaite se servir à nouveau du véhicule, il engage à nouveau la clé dans le mécanisme à pène d'antivol pour déplacer celui-ci vers sa position escamotée. Ce déplacement du pène provoque la libération du manchon de liaison des deux portions d'arbre. Celui-ci est sollicité vers sa position active par les moyens élastiques. L'utilisateur en faisant tourner le volant provoque la venue en regard de parties en saillie d'une bague solidaire de la portion d'arbre interne et de fentes du manchon, formant les seconds moyens d'accouplement, qui peuvent alors s'embrayer à nouveau pour assurer l'expansion du manchon contre la portion d'arbre externe et une liaison sans jeu entre ces portions d'arbre. Dans cette position, les moyens de verrouillage du manchon en position active, sont également déplacés par le mécanisme d'antivol de leur position escamotée vers leur position active de verrouillage de ce manchon en position.

L'ensemble est alors en position de fonctionnement normal.

On notera que ces moyens de verrouillage peuvent être reliés à des moyens classiques d'interdiction du démarrage du moteur du véhicule tant que ceux-ci ne sont pas en position correcte de verrouillage du manchon en position active.

Ceci apporte encore une sécurité supplémentaire d'accouplement.

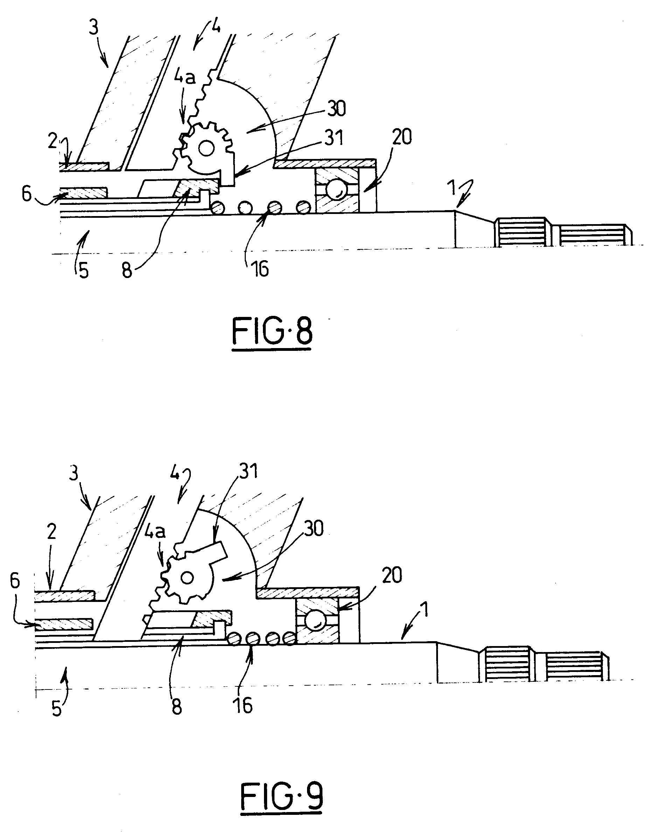

Sur les Fig.8 et 9, on a représenté une variante de réalisation des moyens de verrouillage du manchon en position active.

Alors que dans les Fig.1 à 7, ces moyens de verrouillage étaient formés par un organe dont une extrémité était recourbée en forme de crochet, dans le mode réalisation représenté sur ces figures 8 et 9, ces moyens de verrouillage comprennent un pignon 30 comportant une partie en saillie de butée 31 adaptée pour coopérer avec une surface de butée correspondante du manchon 8 pour retenir celui-ci en position.

Cette surface de butée correspondante du manchon est également formée par la surface d'extrémité de celui-ci opposée à celle à laquelle sont prévus les seconds moyens d'accouplement.

Ce pignon est adapté pour coopérer avec une portion dentée 4a du pène 4 pour assurer ses déplacements entre une position active de verrouillage du manchon en position active, représentée sur la Fig.8 et une position escamotée dans laquelle le manchon 8 peut se déplacer vers sa position escamotée d'antivol de libération des deux portions d'arbre, représentée sur la Fig.9.

Les autres éléments représentés sur ces figures 8 et 9 sont désignés par les mêmes numéros de référence que ceux utilisés pour désigner les éléments analogues sur les figures 1 à 7.

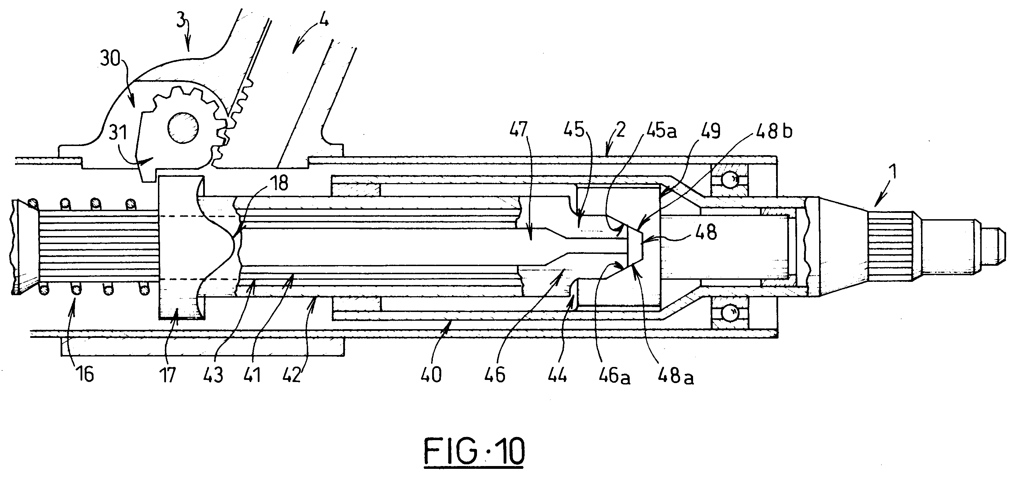

Sur la Fig.10, on a représenté encore un autre mode de réalisation d'un ensemble selon l'invention.

On reconnait sur cette figure 10, l'arbre de direction 1, le corps de colonne 2 et le mécanisme à pène d'antivol 3.

L'arbre de direction comporte toujours deux portions d'arbre désignées par les références 40 et 41 sur ces figures.

Cependant, alors que dans les modes de réalisation décrits en regard des Fig.1 à 9, le volant était porté par la portion d'arbre interne et le reste du mécanisme de direction était relié à la portion d'arbre externe, dans le mode de réalisation réprésenté sur la Fig.10, le volant est porté par la portion d'arbre externe 40 et le reste du mécanisme de direction est relié à la portion d'arbre interne 41.

Un manchon 42 est toujours monté déplaçable à coulissement entre ces deux portions d'arbre pour assurer une liaison débrayable entre ces deux portions d'arbre sous la commande du mécanisme à pène d'antivol 3.

Ce manchon comporte également des premiers moyens d'accouplement désignés par la référence générale 43 adaptés pour coopérer avec des moyens d'accouplement complémentaires de la portion d'arbre 41 reliée au reste du mécanisme de direction et des seconds moyens d'accouplement désignés par la référence générale 44 adaptés pour coopérer avec des moyens d'accouplement complémentaires de la portion d'arbre portant le volant 40.

Les premiers moyens d'accouplement sont par exemple toujours constitués par des cannelures complémentaires de cette portion d'arbre et de ce manchon.

Dans le mode de réalisation représenté sur cette figure, le manchon est également déformable radialement et les seconds moyens d'accouplement 44 comprennent des moyens de serrage du manchon 42 sur la portion d'arbre interne 41, en position active de celui-ci.

Dans le mode de réalisation représenté, les seconds moyens d'accouplement 44 comprennent au moins deux parties en saillie axiales 45 et 46 s'étendant de part et d'autre d'une fente axiale 47 du manchon, ces parties en saillie axiales étant adaptées pour s'engager dans une partie en creux axiale correspondante 48 de la portion d'arbre externe 40.

De manière équivalente à ce qui a déjà été décrit en regard des figures 1 à 7, les parties en saillie axiales du manchon et/ou les parois de la portion d'arbre externe délimitant la partie en creux axiale correspondante, comportent des rampes de serrage du manchon sur la portion d'arbre interne. Ces rampes sont désignées par exemple par les références 45a, 46a et 48a et 48b sur cette Fig.10.

Avantageusement, ces seconds moyens d'accouplement comprennent deux ensembles de parties en saillie séparées chacune par une fente axiale du manchon, décalés angulairement d'un angle différent de 180° et adaptés pour s'engager dans deux parties en creux axiales correspondantes de la portion d'arbre externe pour réaliser un détrompage, comme cela a été expliqué précédemment.

Avantageusement, la ou chaque partie en creux axiale 48 de ces seconds moyens d'accouplement 44 est prévue dans une bague 49 disposée dans et solidaire de la portion d'arbre externe 40.

Les autres éléments de ce mode de réalisation sont analogues aux éléments correspondants déjà décrits en regard des figures 1 à 9, c'est à dire qu'à son extrémité opposée à celle à laquelle sont prévus les seconds moyens d'accouplement 44, le manchon 42 comporte une bague 17 de déplacement comportant au moins une portion en forme de came 18 adaptée pour coopérer avec le pène 4 du mécanisme d'antivol 3 lors de la rotation des portions d'arbre pour déplacer le manchon vers une position escamotée d'antivol.

Le manchon est également sollicité en position active par des moyens élastiques 16 en appui sur l'extrémité correspondante de ce manchon 42 et sur une surface de butée de la portion d'arbre interne.

Par ailleurs, le verrouillage du manchon en position active est également assuré par un pignon analogue au pignon 30 décrit en regard des figures 8 et 9 comportant la partie en saillie 31 adaptée pour coopérer avec une surface de butée correspondante de ce manchon.

Le fonctionnement du dispositif décrit en regard de cette figure, est analogue à celui décrit en regard des figures précédentes à l'exception du fait qu'au lieu de comporter des moyens d'expansion du manchon contre la portion d'arbre externe, les seconds moyens d'accouplement 44 décrits dans ce mode de réalisation, comportent des moyens de serrage de ce manchon sur la portion d'arbre interne pour assurer une transmission sans jeu de la rotation entre les deux portions d'arbre.

Dans ce mode de réalisation également, le manchon est monté déplaçable sous la commande du pène par l'intermédiaire de la bague de déplacement et plus particulièrement des portions en forme de came de celle-ci, entre une position active dans laquelle les seconds moyens d'accouplement 44 sont en position embrayée et autorisent la transmission du mouvement de rotation entre les deux portions d'arbre et une position escamotée dans laquelle ces seconds moyens d'accouplement sont débrayés pour permettre une rotation libre de la portion d'arbre externe portant le volant par rapport au reste de l'ensemble de colonne de direction. La portion d'arbre interne reliée au reste du mécanisme de direction du véhicule est alors bloquée en rotation par rapport au corps de colonne 2 par le pène 4 s'engageant dans une lumière de ce manchon, formée par exemple par la fente 47 séparant deux parties en saillie axiales correspondantes de celui-ci.

On conçoit donc que l'ensemble de colonne selon l'invention présente une sécurité de fonctionnement optimale.

En effet, les moyens de liaison débrayables sont montés déplaçables entre les deux portions d'arbre, sont sollicités en position active par des moyens élastiques et sont retenus dans cette position par des moyens de verrouillage dont la position est pilotée par le mécanisme à pène d'antivol. De plus, en position active, des moyens de liaison débrayables sont mis sous contrainte entre les deux portions d'arbre.

En position normale de fonctionnement, la transmission du mouvement de rotation entre les deux portions d'arbre est donc assurée sans jeu et de manière extrêmement sûre, c'est à dire sans risque de déclenchement intempestif.

Le passage en position d'antivol se fait selon une routine habituelle pour l'utilisateur par retrait de la clé du mécanisme d'antivol et déplacement du volant de direction jusqu'à obtenir l'effet d'antivol.

Le retour en position normale de conduite se fait également selon une routine habituelle pour l'utilisateur par engagement de la clé dans le mécanisme d'antivol et déplacement du volant jusqu'à obtenir l'effet d'embrayage des deux portions d'arbre et ceci sans risque de se trouver dans une fausse position d'accouplement des deux portions d'arbre.

## Revendications

1. Ensemble de colonne de direction notamment pour véhicule automobile, du type comportant un arbre de direction (1) monté déplaçable à rotation dans un corps de colonne (2) comportant un mécanisme (3) à pène (4) d'antivol du véhicule, déplaçable entre une position escamotée et une position active d'antivol, ledit arbre comportant deux portions d'arbre (5,6;40,41), l'une portant le volant et l'autre étant reliée au reste du mécanisme de direction du véhicule et reliées par des moyens de liaison débrayables (8;42), comprenant un manchon (8;42) déplaçable à coulissement axial et comportant des premiers moyens d'accouplement (9;43) adaptés pour coopérer avec des moyens d'accouplement complémentaires de la portion d'arbre (6;41) reliée au reste du mécanisme de direction du véhicule et des seconds moyens d'accouplement (10;44) adaptés pour coopérer avec des moyens d'accouplement complémentaires de la portion d'arbre (5;40) portant le volant, sous la commande du mécanisme d'antivol, entre une position active d'accouplement des deux portions d'arbre et une position escamotée d'antivol de libération des deux portions d'arbre l'une par rapport à l'autre de manière que la portion d'arbre (5;40) portant le volant soit libre en rotation par rapport à l'autre portion d'arbre (6;41) reliée au reste du mécanisme de direction du véhicule, des zones d'extrémité correspondantes (5a,6a) des portions d'arbre étant disposées l'une autour de l'autre, caractérisé en ce que le manchon (8,42) est monté déplaçable entre les deux portions d'arbre externe et interne, et en ce que le manchon est déformable radialement et en ce qu'il comporte des moyens (15,16,45,46,48) de mise sous contrainte du manchon (8;42) entre les deux portions d'arbre en position active de celui-ci, pour assurer une transmission sans jeu du mouvement de rotation entre les portions d'arbre.

2. Ensemble selon la revendication 1, caractérisé en ce qu'au moins les seconds moyens d'accouplement (10;44) sont débrayables.

3. Ensemble selon la revendication 2, caractérisé en ce que le manchon (8;42) est monté déplaçable à coulissement entre les deux portions d'arbre, entre une position d'embrayage et une position de débrayage des seconds moyens d'accouplement (10;44), les premiers moyens d'accouplement (9;43) étant formés par des parties en saillie et en creux radiales complémentaires de ce manchon et de la portion d'arbre correspondante, autorisant un coulissement axial du manchon par rapport à cette portion d'arbre, tandis que les seconds moyens d'accouplement (10;44) sont formés par des parties en saillie et en creux axiales correspondantes, de l'autre portion d'arbre et du manchon.

4. Ensemble selon l'une quelconque des revendications précédentes, caractérisé en ce que la portion d'arbre externe (6) est reliée au reste du mécanisme de direction et en ce que les seconds moyens d'accouplement (10) comprennent des moyens d'expansion du manchon (8) contre la portion d'arbre externe en position active de celui-ci.

5. Ensemble selon l'une quelconque des revendications précédentes, caractérisé en ce que les seconds moyens d'accouplement (10) comprennent au moins une partie en saillie axiale (11) reliée à la portion d'arbre interne (5) et adaptée pour s'engager dans une fente axiale (13,14) formant la partie en creux axiale correspondante, du manchon (8).

6. Ensemble selon la revendication 5, caractérisé en ce que la ou chaque partie en saillie (11) et/ou les parois du manchon (8) délimitant la ou chaque fente (13,14) comportent des rampes (15) d'expansion du manchon contre la portion d'arbre externe.

7. Ensemble selon la revendication 6, caractérisé en ce que les rampes d'expansion (15) sont prévues sur la ou chaque partie en saillie axiale (11) reliée à la portion d'arbre interne.

8. Ensemble selon l'une quelconque des revendications 5 à 7, caractérisé en ce que les seconds moyens d'accouplement (10) comprennent deux parties en saillie axiales décalées angulairement d'un angle différent de 180° et adaptées pour coopérer avec deux fentes axiales correspondantes (13,14) du manchon (8).

9. Ensemble selon l'une quelconque des revendications 5 à 8, caractérisé en ce que la ou chaque partie en saillie axiale (11) est prévue sur une bague (12) disposée autour et solidaire de la portion d'arbre interne.

10. Ensemble selon l'une quelconque des revendications précédentes, caractérisé en ce que la portion d'arbre interne (41) est reliée au reste du mécanisme de direction du véhicule et en ce que les seconds moyens d'accouplement (44) comprennent des moyens de serrage du manchon (42) sur la portion d'arbre interne, en position active de celui-ci.

11. Ensemble selon la revendication 10, caractérisé en ce que les seconds moyens d'accouplement (44) comprennent au moins deux parties en saillie axiales (45,46) s'étendant de part et d'autre d'une fente axiale (47) du manchon (42) et adaptées pour s'engager dans une partie en creux axiale correspondante (48) de la portion d'arbre externe (40).

12. Ensemble selon la revendication 11, caractérisé en ce que les parties en saillie axiales (45,46) du manchon (42) et/ou les parois de la portion d'arbre externe délimitant la partie en creux axiale correspondante (47) comportent des rampes (45a,46a,48a,48b) de serrage du manchon (42) sur la portion d'arbre interne (41).

13. Ensemble selon la revendication 12, caractérisé en ce que les rampes de serrage sont prévues sur les parois de la portion d'arbre externe délimitant la ou chaque partie en creux axiale.

14. Ensemble selon l'une quelconque des revendications 11 à 13, caractérisé en ce que les seconds moyens d'accouplement (44) comprennent deux ensembles de parties en saillie séparées chacune par une fente axiale du manchon, décalés angulairement d'un angle différent de 180° et adaptés pour s'engager dans deux parties en creux axiales correspondantes de la portion d'arbre externe (40).

15. Ensemble selon l'une quelconque des revendications 11 à 14, caractérisé en ce que la ou chaque partie en creux axiale est prévue dans une bague (49) disposée dans et solidaire de la portion d'arbre externe (40).

16. Ensemble selon l'une quelconque des revendications 3 à 15, caractérisé en ce que les surfaces de contact des parties en saillie et en creux correspondantes des seconds moyens d'accouplement, sont les unes bombées et les autres en forme de plans inclinés.

17. Ensemble selon l'une quelconque des revendications précédentes, caractérisé en ce que les seconds moyens d'accouplement (10;44) sont prévus à l'une des extrémités du manchon (8;42) entre les portions d'arbre externe et interne.

18. Ensemble selon l'une quelconque des revendications précédentes, caractérisé en ce qu'il comporte des moyens élastiques (16) de sollicitation du manchon (8;42) en position active d'accouplement des deux portions d'arbre externe et interne.

19. Ensemble selon la revendication 18, caractérisé en ce que les moyens élastiques comprennent un ressort hélicoïdal (16) disposé autour de la portion d'arbre interne (5;41) dont une extrémité est en appui sur l'une des extrémités du manchon et l'autre sur une surface de butée de la portion d'arbre interne.

20. Ensemble selon les revendications 17 et 19, caractérisé en ce que le ressort est en appui sur l'extrémité du manchon opposée à celle à laquelle sont prévus les seconds moyens d'accouplement.

21. Ensemble selon l'une quelconque des revendications précédentes, caractérisé en ce que le manchon comporte une bague de déplacement (17) comportant au moins une portion en forme de came (18), adaptée pour coopérer avec le pène (4) du mécanisme d'antivol (3) lorsque celui-ci est en position active, pour déplacer le manchon (8;42) vers sa position escamotée d'antivol lors de la rotation des portions d'arbre.

22. Ensemble selon la revendication 21, caractérisé en ce que la bague de déplacement (17) comporte deux portions en forme de came de déplacement, diamétralement opposées.

23. Ensemble selon les revendications 17 et 21 ou 22, caractérisé en ce que la bague de déplacement est disposée à proximité de l'extrémité du manchon (8;42) opposée à celle à laquelle sont prévus les seconds moyens d'accouplement (10;44), et au-delà de l'extrémité correspondante de la portion d'arbre externe (6;40), la ou chaque portion en forme de came étant dirigée vers les seconds moyens d'accouplement (10;44).

24. Ensemble selon l'une quelconque des revendications 1 à 20 et 21, 22 ou 23, caractérisé en ce que le manchon comporte au moins une lumière (13,14;47) de réception du pène du mécanisme d'antivol, en position active de celui-ci, pour bloquer celui-ci et donc la portion d'arbre reliée au reste du mécanisme de direction en position par rapport au corps de colonne, ladite lumière étant ménagée en regard d'une portion en forme de came (18) de la bague (17) de déplacement du manchon.

25. Ensemble selon l'une quelconque des revendications 5 à 9 ou 11 à 15 et 24, caractérisé en ce que la ou chaque lumière du manchon adaptée pour recevoir le pène en position active, est formée par une portion de la ou de chaque fente de ce manchon.

26. Ensemble selon l'une quelconque des revendication 3 à 25, caractérisé en ce que l'extrémité de la ou de chaque partie en saillie axiale (11) des seconds moyens d'accouplement (10) comporte des plans inclinés (19) adaptés pour coopérer avec une arête d'extrémité correspondante de la ou de chaque partie en creux axiale (13,14) et le bord d'extrémité correspondant du manchon, pour provoquer un recul supplémentaire de celui-ci, en position escamotée en fin de course de déplacement lors de la rotation des portions d'arbre, afin de dégager la bague de déplacement et plus particulièrement la portion en forme de came (18), du pène et faciliter l'engagement de ce pène dans une lumière correspondante du manchon.

27. Ensemble selon l'une quelconque des revendications 7 ou 13 et 26, caractérisé en ce que les plans inclinés (19) de la ou de chaque partie en saillie axiale (11) des seconds moyens d'accouplement (10) sont séparés des rampes correspondantes (15) par une portion plane (11a) d'anti-recul du manchon.

28. Ensemble selon l'une quelconque des revendications précédentes, caractérisé en ce que des paliers de guidage (20,21) de la portion d'arbre portant le volant sont interposés d'une part entre le corps de colonne et une partie correspondante de cette portion d'arbre et d'autre part, entre une autre partie de cette portion d'arbre et une partie correspondante de la portion d'arbre reliée au reste du mécanisme de direction et/ou le manchon.

29. Ensemble selon l'une quelconque des revendications précédentes, caractérisé en ce qu'il comporte des moyens escamotables (22;30) de verrouillage du manchon (8;42) en position active.

30. Ensemble selon la revendication 29, caractérisé en ce que les moyens de verrouillage du manchon en position active sont montés déplaçables entre une position active de verrouillage et une position escamotée de déverrouillage de celui-ci par l'intermédiaire du mécanisme à pène d'antivol du véhicule (3).

31. Ensemble selon la revendication 30, caractérisé en ce que les moyens de verrouillage comprennent un organe de verrouillage (22) dont une extrémité est recourbée en forme de crochet (23) adapté pour coopérer avec une surface de butée correspondante du manchon (8;42) pour retenir celui-ci en position et dont l'autre extrémité est reliée au mécanisme à pène d'antivol.

32. Ensemble selon la revendication 30, caractérisé en ce que les moyens de verrouillage comprennent un pignon (30) comportant une partie en saillie de butée (31) adaptée pour coopérer avec une surface de butée correspondante du manchon (8;42) pour retenir celui-ci en position et adapté pour coopérer avec une portion dentée (4a) du pène.

33. Ensemble selon la revendication 31 ou 32, caractérisé en ce que la surface de butée correspondante du manchon (8;42) est formée par la surface d'extrémité de celui-ci opposée à celle à laquelle sont prévus les seconds moyens d'accouplement (10;44).

34. Ensemble selon l'une quelconque des revendications précédentes, caractérisé en ce que le manchon (8;42) comporte deux demi-coquilles (8a,8b) reliées à l'une de leurs extrémités.

35. Ensemble selon l'une quelconque des revendictions 29 à 33, caractérisé en ce que les moyens (22;30) de verrouillage du manchon sont reliés à des moyens d'interdiction du démarrage du moteur du véhicule tant qu'ils ne sont pas en position de verrouillage du manchon en position active.

## Claims

1. Steering column assembly especially for a motor vehicle, of the type including a steering shaft (1) mounted so that it can move in rotation in a column body (2) including a mechanism (3) with a lock (4) preventing the theft of the vehicle, which can move between a retracted position and an active anti-theft position, the said shaft including two shaft portions (5, 6; 40, 41), one carrying the steering wheel and the other being connected to the rest of the steering mechanism of the vehicle, these two portions being joined together by disengageable linking means (8; 42) comprising a sleeve (8; 42) which can move with axial sliding and includes first coupling means (9; 43) designed to interact with complementary coupling means of the shaft portion (6; 41) connected to the rest of the steering mechanism of the vehicle and second coupling means (10; 44) designed to interact with a complementary coupling means of the shaft portion (5; 40) carrying the steering wheel under the control of the anti-theft mechanism, between an active position for coupling the two shaft portions and a retracted anti-theft position for freeing the two shaft portions with respect to each other so that the shaft portion (5; 40) carrying the steering wheel is free to rotate with respect to the other shaft portion (6; 41) connected to the rest of the steering mechanism of the vehicle, corresponding end regions (5a, 6a) of the shaft portions being arranged one around the other, characterized in that the sleeve (8, 42) is mounted so that it can move between the two, external and internal, shaft portions and in that the sleeve is radially deformable and in that it includes means (15, 16, 45, 46, 48) for stressing the sleeve (8; 42) between the two shaft portions when it is in an active position, in order to transmit the rotational movement without play between the shaft portions.

2. Assembly according to Claim 1, characterized in that at least the second coupling means (10; 44) are disengageable.

3. Assembly according to Claim 2, characterized in that the sleeve (8; 42) is mounted so that it can slide between the two shaft portions, between a position of engaging and a position of disengaging the second coupling means (10; 44), the first coupling means (9; 43) being formed by complementary radial projecting and recessed parts of this sleeve and of the corresponding shaft portion, allowing axial sliding of the sleeve with respect to this shaft portion, while the second coupling means (10; 44) are formed by corresponding axial projecting and recessed parts of the other shaft portion and of the sleeve.

4. Assembly according to any one of the preceding claims, characterized in that the external shaft portion (6) is connected to the rest of the steering mechanism and in that the second coupling means (10) comprise means for expanding the sleeve (8) against the external shaft portion when the sleeve is in the active position.

5. Assembly according to any one of the preceding claims, characterized in that the second coupling means (10) comprise at least one axial projecting part (11) connected to the internal shaft portion (5) and designed to engage in an axial slot (13, 14) forming the corresponding axial recessed part of the sleeve (8).

6. Assembly according to Claim 5, characterized in that the or each projecting part (11) and/or the walls of the sleeve (8) delimiting the or each slot (13, 14) include ramps (15) for expanding the sleeve against the external shaft portion.

7. Assembly according to Claim 6, characterized in that the expansion ramps (15) are provided on the or each axial projecting part (11) connected to the internal shaft portion.

8. Assembly according to any one of Claims 5 to 7, characterized in that the second coupling means (10) comprise two axial projecting parts offset angularly by an angle other than 180° and designed to interact with two corresponding axial slots (13, 14) of the sleeve (8).

9. Assembly according to any one of Claims 5 to 8, characterized in that the or each axial projecting part (11) is provided on a ring (12) arranged around and secured to the internal shaft portion.

10. Assembly according to any one of the preceding claims, characterized in that the internal shaft portion (41) is connected to the rest of the steering mechanism of the vehicle and in that the second coupling means (44) comprise means for clamping the sleeve (42) on to the internal shaft portion, when this sleeve is in the active position.

11. Assembly according to Claim 10, characterized in that the second coupling means (44) comprise at least two axial projecting parts (45, 46) stretching on either side of an axial slot (47) of the sleeve (42) and designed to engage in a corresponding axial recessed part (48) of the external shaft portion (40).

12. Assembly according to Claim 11, characterized in that the axial projecting parts (45, 46) of the sleeve (42) and/or the walls of the external shaft portion delimiting the corresponding axial recessed part (47) include ramps (45a, 46a, 48a, 48b) for clamping the sleeve (42) on to the internal shaft portion (41).

13. Assembly according to Claim 12, characterized in that the clamping ramps are provided on the walls of the external shaft portion delimiting the or each axial recessed part.

14. Assembly according to any one of Claims 11 to 13, characterized in that the second coupling means (44) comprise two sets of projecting parts, each part being separated by an axial slot of the sleeve, the sets being angularly offset by an angle other than 180° and designed to engage in corresponding axial recessed parts of the external shaft portion (40).

15. Assembly according to any one of Claims 11 to 14, characterized in that the or each axial recessed part is provided with a ring (49) arranged in and secured to the external shaft portion (40).

16. Assembly according to any one of Claims 3 to 15, characterized in that some of the contacting surfaces of the corresponding projecting and recessed parts of the second coupling means are domed while others are in the form of inclined planes.

17. Assembly according to any one of the preceding claims, characterized in that the second coupling means (10; 44) are provided at one of the ends of the sleeve (8; 42), between the external and internal shaft portions.

18. Assembly according to any one of the preceding claims, characterized in that it includes elastic means (16) for urging the sleeve (8; 42) into the active position of coupling the two, external and internal, shaft portions.

19. Assembly according to Claim 18, characterized in that the elastic means comprise a coil spring (16) arranged around the internal shaft portion (5; 41), one end of which rests on one of the ends of the sleeve and the other end of which rests on a thrust surface of the internal shaft portion.

20. Assembly according to Claims 17 and 19, characterized in that the spring rests on the opposite end of the sleeve to the one where the second coupling means are provided.

21. Assembly according to any one of the preceding claims, characterized in that the sleeve includes a movement ring (17) including at least one cam-shaped portion (18) designed to interact with the lock (4) of the anti-theft mechanism (3) when the latter is in the active position, in order to move the sleeve (8; 42) towards its retracted anti-theft position when the shaft portions are rotated.

22. Assembly according to Claim 21, characterized in that the movement ring (17) includes two diametrically opposed movement-cam-shaped portions.

23. Assembly according to Claims 17 and 21 or 22, characterized in that the movement ring is arranged close to the opposite end of the sleeve (8; 42) to the one where the second coupling means (10; 44) are provided, and beyond the corresponding end of the external shaft portion (6; 40), the or each cam-shaped portion pointing towards the second coupling means (10; 44).

24. Assembly according to any one of Claims 1 to 20 and 21, 22 or 23, characterized in that the sleeve includes at least one opening (13, 14; 47) for receiving the lock of the anti-theft mechanism, when the latter is in the active position, in order to block the latter and therefore the shaft portion connected to the rest of the steering mechanism in position with respect to the column body, the said opening being formed facing a cam-shaped portion (18) of the movement ring (17) of the sleeve.

25. Assembly according to any one of Claims 5 to 9 or 11 to 15 and 24, characterized in that the or each sleeve opening designed to receive the lock in the active position is formed by a portion of the or of each slot of this sleeve.

26. Assembly according to any one of Claims 3 to 25, characterized in that the end of the or of each axial projecting part (11) of the second coupling means (10) includes inclined planes (19) designed to interact with a corresponding end ridge of the or of each axial recessed part (13, 14) and the corresponding end edge of the sleeve, in order to cause an additional backwards movement thereof into the retracted position at the end of its travel when the shaft portions are rotated, in order to disengage the movement ring and, more specifically, the cam-shaped portion (18) from the lock and facilitate engagement of this lock in a corresponding opening of the sleeve.

27. Assembly according to any one of Claims 7 or 13 and 26, characterized in that the inclined planes (19) of the or of each axial projecting part (11) of the second coupling means (10) are separated from the corresponding ramps (15) by a flat portion (11a) preventing backwards movement of the sleeve.

28. Assembly according to any one of the preceding claims, characterized in that bearings (20, 21) for guiding the shaft portion carrying the steering wheel are interposed on the one hand between the column body and a corresponding part of this shaft portion and, on the other hand, between another part of this shaft portion and a corresponding part of the shaft portion connected to the rest of the steering mechanism and/or the sleeve.

29. Assembly according to any one of the preceding claims, characterized in that it includes retractable means (22; 30) for locking the sleeve (8; 42) in the active position.

30. Assembly according to Claim 29, characterized in that the means for locking the sleeve in the active position are mounted so they can move between an active position for locking it and a retracted position for unlocking it via the lock mechanism (3) for preventing the theft of the vehicle.

31. Assembly according to Claim 30, characterized in that the locking means comprise a locking member (22), one end of which is bent into the shape of a hook (23) designed to interact with a corresponding thrust surface of the sleeve (8; 42) in order to hold the latter in position, and the other end of which is connected to the anti-theft lock mechanism.

32. Assembly according to Claim 30, characterized in that the locking means comprise a pinion (30) including a projecting thrust part (31) designed to interact with a corresponding thrust surface of the sleeve (8; 42) in order to hold the latter in position and designed to interact with a toothed portion (4a) of the lock.

33. Assembly according to Claim 31 or 32, characterized in that the corresponding thrust surface of the sleeve (8; 42) is formed by its opposite end surface to the one where the second coupling means (10; 44) are provided.

34. Assembly according to any one of the preceding claims, characterized in that the sleeve (8; 42) includes two half-shells (8a, 8b) joined together at one of their ends.

35. Assembly according to any one of Claims 29 to 33, characterized in that the means (22; 30) for locking the sleeve are connected to means for preventing the engine of the vehicle from being started until they are in the position for locking the sleeve in the active position.

## Patentansprüche

1. Lenksäuleneinheit, insbesondere für ein Kraftfahrzeug, bestehend aus einer Lenkspindel (1), die drehbar verschiebbar in einem Säulenkörper (2) montiert ist, bestehend aus einem Mechanismus (3) mit Diebstahlsicherungsschloß (4) für das Fahrzeug, der zwischen einer eingezogenen Position und einer aktiven Diebstahlsicherungsposition verschiebbar ist, wobei diese Spindel zwei Spindelabschnitte (5, 6; 40, 41) umfaßt, wobei der eine das Lenkrad trägt und der andere mit dem übrigen Lenkmechanismus des Fahrzeugs verbunden ist und beide durch auskuppelbare Verbindungsmittel (8; 42), bestehend aus einer axial gleitenden verschiebbaren Hülse (8; 42) und aus ersten Kupplungsmitteln (9; 43), die derart ausgeführt sind, daß sie mit Kupplungsmitteln zusammenwirken, die zu dem Spindelabschnitt (6; 41) komplementär sind, der mit dem übrigen Lenkmechanismus des Fahrzeugs verbunden ist, und aus zweiten Kupplungsmitteln (10; 44), die derart ausgeführt sind, daß sie mit Kupplungsmitteln zusammenwirken, die zu dem Spindelabschnitt (5; 40) komplementär sind, der das Lenkrad trägt, unter der Steuerung des Diebstahlsicherungsmechanismus zwischen einer aktiven Kupplungsposition der beiden Spindelabschnitte und einer eingezogenen Diebstahlsicherungsposition zur Freigabe der beiden Spindelabschnitte in bezug zueinander verbunden sind, sodaß der Spindelabschnitt (5; 40), der das Lenkrad trägt, in bezug auf den anderen Spindelabschnitt (6; 41), welcher mit dem übrigen Lenkmechanismus des Fahrzeugs verbunden ist, frei drehbar ist, wobei entsprechende Endbereiche (5a, 6a) der Spindelabschnitte umeinander angeordnet sind,
**dadurch gekennzeichnet**, **daß**
die Hülse (8; 42) verschiebbar zwischen dem äußeren und inneren Spindelabschnitt angeordnet ist und daß die Hülse radial verformbar ist und daß sie Mittel (15, 16; 45, 46; 48) zur Unterspannungsetzung der Hülse (8; 42) zwischen den beiden Spindelabschnitten in der aktiven Position derselben umfaßt, um eine spielfreie Übertragung der Bewegung zwischen den Spindelpositionen zu gewährleisten.

2. Einheit nach Anspruch 1,
**dadurch gekennzeichnet**, **daß**
zumindest die zweiten Kupplungsmittel (10; 44) auskuppelbar sind.

3. Einheit nach Anspruch 2,
**dadurch gekennzeichnet**, **daß**
die Hülse (8; 42) gleitend verschiebbar zwischen den beiden Spindelabschnitten zwischen einer eingekuppelten und einer ausgekuppelten Position der zweiten Kupplungsmittel (10; 44) montiert ist, wobei die ersten Kupplungsmittel (9; 43) von vorspringenden und hohlen radialen Teilen gebildet werden, die zu dieser Hülse und zu dem entsprechenden Spindelabschnitt komplementär sind, und ein axiales Gleiten der Hülse in bezug auf diesen Spindelabschnitt ermöglichen, während die zweiten Kupplungsmittel (10; 44) von vorspringenden und hohlen entsprechenden axialen Teilen des anderen Spindelabschnittes und der Hülse gebildet werden.

4. Einheit nach einem der vorhergehenden Ansprüche,
**dadurch gekennzeichnet**, **daß**
der äußere Spindelabschnitt (6) mit dem übrigen Lenkmechanismus verbunden ist und daß die zweiten Kupplungsmittel (10) Mittel für die Ausdehnung der Hülse (8) gegen den äußeren Spindelabschnitt in der aktiven Position derselben umfassen.

5. Einheit nach einem der vorhergehenden Ansprüche,
**dadurch gekennzeichnet**, **daß**
die zweiten Kupplungsmittel (10) zumindest einen axial vorspringenden Teil (11) umfassen, der mit dem inneren Spindelabschnitt (5) verbunden ist und derart ausgeführt ist, daß er in einen axialen Spalt (13, 14) eingreift, der den entsprechenden axialen hohlen Teil der Hülse (8) bildet.

6. Einheit nach Anspruch 5,
**dadurch gekennzeichnet**, **daß**
der bzw. jeder vorspringende Teil (11) und/oder die Wandungen der Hülse (8), die den bzw. jeden Spalt (13, 14) begrenzen, Ausdehnungsrampen (15) für die Hülse gegen den äußeren Spindelabschnitt hin umfassen.

7. Einheit nach Anspruch 6,
**dadurch gekennzeichnet**, **daß**
die Ausdehnungsrampen (15) auf dem bzw. jedem axialen vorspringenden Teil (11) vorgesehen sind, der mit dem inneren Spindelabschnitt verbunden ist.

8. Einheit nach einem der Ansprüche 5 bis 7,
**dadurch gekennzeichnet**, **daß**
die zweiten Kupplungsmittel (10) zwei vorspringende axiale Teile umfassen, die um einen unterschiedlichen Winkel von 180° winkelversetzt sind und dermaßen ausgeführt sind, daß sie mit zwei entsprechenden axialen Spalten (13, 14) der Hülse (8) zusammenwirken.

9. Einheit nach einem der Ansprüche 5 bis 8,
**dadurch gekennzeichnet**, **daß**
der bzw. jeder vorspringende axiale Teil (11) auf einem Ring (12) vorgesehen ist, der um den inneren Spindelabschnitt herum angeordnet und mit diesem verbunden ist.

10. Einheit nach einem der vorhergehenden Ansprüche,
**dadurch gekennzeichnet**, **daß**
der innere Spindelabschnitt (41) mit dem übrigen Lenkmechanismus des Fahrzeugs verbunden ist und daß die zweiten Kupplungsmittel (44) Mittel zur Feststellung der Hülse (42) auf dem inneren Spindelabschnitt in der aktiven Position derselben umfassen.

11. Einheit nach Anspruch 10,
**dadurch gekennzeichnet**, **daß**
die zweiten Kupplungsmittel (44) zumindest zwei vorspringende axiale Teile (45, 46) umfassen, die sich auf beiden Seiten eines axialen Spaltes (47) der Hülse (42) erstrecken und derart ausgeführt sind, daß sie in einen entsprechenden hohlen axialen Teil (48) des äußeren Spindelabschnittes (40) eingreifen.

12. Einheit nach Anspruch 11,
**dadurch gekennzeichnet**, **daß**
die vorspringenden axialen Teile (45, 46) der Hülse (42) und/oder die Wandungen des äußeren Spindelabschnittes, die den entsprechenden hohlen axialen Teil (47) begrenzen, Rampen (45a, 46a, 48a, 48b) für die Feststellung der Hülse (42) auf dem inneren Spindelabschnitt (41) umfassen.

13. Einheit nach Anspruch 12,
**dadurch gekennzeichnet**, **daß**
die Feststellungsrampen auf den Wandungen des äußeren Spindelabschnittes vorgesehen sind, die den bzw. jeden axialen hohlen Teil begrenzen.

14. Einheit nach einem der Ansprüche 11 bis 13,
**dadurch gekennzeichnet**, **daß**
die zweiten Kupplungsmittel (44) zwei Einheiten von vorspringenden Teilen, die jeweils durch einen axialen Spalt von der Hülse getrennt sind, umfassen, die um einen unterschiedlichen Winkel von 180° winkelversetzt sind und derart ausgeführt sind, daß sie in zwei entsprechende hohle axiale Teile des äußeren Spindelabschnittes (40) eingreifen.

15. Einheit nach einem der Ansprüche 11 bis 14,
**dadurch gekennzeichnet**, **daß**
der bzw. jeder hohle axiale Teil in einem Ring (49) vorgesehen ist, der in dem äußeren Spindelabschnitt (40) angeordnet und mit diesem verbunden ist.

16. Einheit nach einem der Ansprüche 3 bis 15,
**dadurch gekennzeichnet**, **daß**
die einen Kontaktflächen der entsprechenden vorspringenden und hohlen Teile der zweiten Kupplungsmittel gewölbt sind und die anderen die Form von geneigten Ebenen aufweisen.

17. Einheit nach einem der vorhergehenden Ansprüche,
**dadurch gekennzeichnet**, **daß**
die zweiten Kupplungsmittel (10; 44) auf einem der Enden der Hülse (8; 42) zwischen dem äußeren und dem inneren Spindelabschnitt vorgesehen sind.

18. Einheit nach einem der vorhergehenden Ansprüche,
**dadurch gekennzeichnet**, **daß**
sie elastische Mittel (16) zur Belastung der Hülse (8; 42) in der aktiven Kupplungsposition des äußeren und inneren Spindelabschnittes umfaßt.

19. Einheit nach Anspruch 18,
**dadurch gekennzeichnet**, **daß**
die elastischen Mittel eine Spiralfeder (16) umfassen, die um den inneren Spindelabschnitt (5; 41) herum angeordnet ist, von dem ein Ende auf einem der Enden der Hülse und das andere auf einer Anschlagfläche des inneren Spindelabschnittes aufliegt.

20. Einheit nach den Ansprüchen 17 und 19,
**dadurch gekennzeichnet**, **daß**
die Feder auf dem Ende der Hülse aufliegt, das jenem gegenüberliegt, auf dem die zweiten Kupplungsmittel vorgesehen sind.

21. Einheit nach einem der vorhergehenden Ansprüche,
**dadurch gekennzeichnet**, **daß**
die Hülse einen verschiebbaren Ring (17) umfaßt, der zumindest einen Abschnitt in Form einer Nocke (18) umfaßt, der derart ausgeführt ist, daß er mit dem Schloß (4) des Diebstahlsicherungsmechanismus (3) zusammenwirkt, wenn sich dieser in aktiver Position befindet, um die Hülse (8; 42) in ihre eingezogene Diebstahlsicherungsposition bei der Drehung der Spindelabschnitte zu verschieben.

22. Einheit nach Anspruch 21,
**dadurch gekennzeichnet**, **daß**
der verschiebbare Ring (17) zwei Abschnitte in Form einer verschiebbaren Nocke umfaßt, die einander diametral gegenüberliegen.

23. Einheit nach den Ansprüchen 17 und 21 oder 22,
**dadurch gekennzeichnet**, **daß**
der verschiebbare Ring in der Nähe des Endes der Hülse (8; 42), das jenem gegenüberliegt, auf dem die zweiten Kupplungsmittel (10; 44) vorgesehen sind, und über das entsprechende Ende des äußeren Spindelabschnittes (6; 40) hinaus angeordnet ist, wobei der bzw. jeder Abschnitt in Nockenform zu den zweiten Kupplungsmitteln (10; 44) gerichtet ist.

24. Einheit nach einem der Ansprüche 1 bis 20 und 21, 22 oder 23,
**dadurch gekennzeichnet**, **daß**
die Hülse zumindest ein Schlitzloch (13, 14; 47) für die Aufnahme des Schlosses des Diebstahlsicherungsmechanismus in der aktiven Position desselben umfaßt, um dieses und somit den Spindelabschnitt, der mit dem übrigen Lenkmechanismus verbunden ist, in der Position in bezug auf den Säulenkörper festzustellen, wobei dieses Schlitzloch gegenüber einem Abschnitt in Nockenform (18) des verschiebbaren Ringes (17) der Hülse ausgespart ist.

25. Einheit nach einem der Ansprüche 5 bis 9 oder 11 bis 15 und 24,
**dadurch gekennzeichnet**, **daß**
das bzw. jedes Schlitzloch der Hülse, das derart ausgeführt ist, daß es das Schloß in der aktiven Position aufnehmen kann, von einem Abschnitt des bzw. jedes Spaltes dieser Hülse gebildet wird.

26. Einheit nach einem der Ansprüche 3 bis 25,
**dadurch gekennzeichnet**, **daß**
das Ende des bzw. jedes vorspringenden axialen Teils (11) der zweiten Kupplungsmittel (10) geneigte Ebenen (19) umfaßt, die derart ausgeführt sind, um mit einer entsprechenden Endkante des bzw. jedes axialen hohlen Teils (13, 14) und dem entsprechenden Endrand der Hülse zusammenzuwirken, um ein zusätzliches Zurückweichen derselben in der eingezogenen Position am Verschiebeanschlag bei der Drehung der Spindelabschnitte zu bewirken, um den verschiebbaren Ring und insbesondere den Abschnitt in Nockenform (18) des Schlosses freizugeben und das Eingreifen dieses Schlosses in ein entsprechendes Schlitzloch der Hülse zu erleichtern.

27. Einheit nach einem der Ansprüche 7 oder 13 und 26,
**dadurch gekennzeichnet**, **daß**
die geneigten Ebenen (19) des bzw. jedes axialen vorspringenden Teils (11) der zweiten Kupplungsmittel (10) von den entsprechenden Rampen (15) durch einen ebenen Abschnitt (11a) zur Verhinderung des Zurückweichens der Hülse getrennt sind.

28. Einheit nach einem der vorhergehenden Ansprüche,
**dadurch gekennzeichnet**, **daß**
die Führungslager (20, 21) des Spindelabschnittes, der das Lenkrad trägt, einerseits zwischem dem Säulenkörper und einem entsprechenden Teil dieses Spindelabschnittes und andererseits zwischen einem anderen Teil dieses Spindelabschnittes und einem entsprechenden Teil des Spindelabschnittes angeordnet ist, der mit dem übrigen Lenkmechanismus und/oder der Hülse verbunden ist.

29. Einheit nach einem der vorhergehenden Ansprüche,
**dadurch gekennzeichnet**, **daß**
sie einziehbare Mittel (22; 30) zur Verriegelung der Hülse (8; 42) in der aktiven Position umfaßt.

30. Einheit nach Anspruch 29,
**dadurch gekennzeichnet**, **daß**
die Mittel zur Verriegelung der Hülse in der aktiven Position verschiebbar zwischen einer aktiven Verriegelungsposition und einer eingezogenen Entriegelungsposition derselben durch den Mechanismus mit Diebstahlsicherungsschloß des Fahrzeugs (3) montiert sind.

31. Einheit nach Anspruch 30,
**dadurch gekennzeichnet**, **daß**
die Verriegelungsmittel ein Verriegelungsorgan (22) umfassen, von dem ein Ende in Form eines Hakens (23) gebogen ist, der derart ausgeführt ist, daß er mit einer entsprechenden Anschlagfläche der Hülse (8; 42) zusammenwirkt, um diese in Position zu halten, und von dem das andere Ende mit dem Mechanismus mit dem Diebstahlsicherungsschloß verbunden ist.

32. Einheit nach Anspruch 30,
**dadurch gekennzeichnet**, **daß**
die Verriegelungsmittel einen Ritzel (30) umfassen, der einen vorspringenden Anschlagteil (31) aufweist, der derart ausgeführt ist, daß er mit einer entsprechenden Anschlagfläche der Hülse (8; 42) zusammenwirkt, um diese in Position zu halten, und der derart ausgeführt ist, daß er mit einem gezahnten Abschnitt (4a) des Schlosses zusammenwirkt.

33. Einheit nach Anspruch 31 oder 32,
**dadurch gekennzeichnet**, **daß**
die entsprechende Anschlagfläche der Hülse (8; 42) von der Endfläche derselben gebildet wird, die jener gegenüberliegt, auf der die zweiten Kupplungsmittel (10; 44) vorgesehen sind.

34. Einheit nach einem der vorhergehenden Ansprüche,
**dadurch gekennzeichnet**, **daß**
die Hülse (8; 42) zwei halbe Schalen (8a, 8b) umfaßt, die mit einem ihrer Enden verbunden sind.

35. Einheit nach einem der Ansprüche 29 bis 33,
**dadurch gekennzeichnet**, **daß**
die Mittel (22; 30) zur Verriegelung der Hülse mit Mitteln zur Verhinderung des Startens des Motors des Fahrzeugs, solange sie sich nicht in der Position der Verriegelung der Hülse in der aktiven Position befinden, verbunden sind.
